# EUROPÄISCHE PATENTSCHRIFT

(11) **EP 0 489 714 B1**
(45) Veröffentlichungstag und Bekanntmachung des Hinweises auf die Patenterteilung: **27.12.1995**
(21) Anmeldenummer: 92103138.1
(22) Anmeldetag: 04.06.1988
(51) Int. Cl.: D06F 75/14

(54) **Elektrisch betriebenes Dampfbügeleisen**
Electric steam iron
Fer à repasser à vapeur électrique

(30) Priorität: 05.09.1987 DE 3729800
(43) Veröffentlichungstag der Anmeldung: 10.06.1992
(62) Teilanmeldung aus: 88108964.3
(73) Patentinhaber: Robert Krups GmbH & Co. KG, 42719 Solingen (DE)
(72) Erfinder: Mahlich, Gotthard Chr., W-6242 Kronberg (DE); Borgmann, Michael, W-5650 Solingen (DE)
(74) Vertreter: Buse, Karl Georg, Dipl.-Phys.

(56) Entgegenhaltungen:
- DE-A- 3 014 493
- DE-A- 3 033 964
- GB-A- 1 022 697
- GB-A- 2 148 331
- US-A- 3 949 499

## Beschreibung

Die Erfindung betrifft ein elektrisch betriebenes Dampfbügeleisen mit einem einen Handgriff aufweisenden Gehäuse, mit einem vom Gehäuse entfernbaren Wasserbehälter und mit einer Verdampferkammer sowie mit einem Entkalkungsmittel.

Derartige elektrisch betriebene Dampfbügeleisen, die in unterschiedlichen Ausführungsformen bekannt sind, benötigen beim bestimmungsgemäßen Gebrauch die Verwendung von Wasser, welches verdampft werden muß. In aller Regel wird dabei vom Benutzer Leitungswasser eingesetzt. Solches Leitungswasser ist chemisch gesehen nicht rein. Vielmehr enthält es neben aufgelösten Gasen eine Reihe von Salzen, die aus Böden, Gestein od.dgl. herausgelöst sind. Zu den Salzen, die im Leitungswasser enthalten sind, gehören u.a. Calciumbicarbonat, Calciumsulfat und Magnesiumbicarbonat. Zusammenfassend bezeichnet man diese als Härte des Wassers. Zur Kennzeichnung der Härte des Wassers ist die Bezeichnung "Härtegrad" in Gebrauch. Je höher der Wert eines Härtegrades ist, um so härter ist das Wasser.

Bei der Benutzung elektrisch betriebener Dampfbügeleisen spielt die Härte des in dem Wasserbehälter eingefüllten Wassers eine wesentliche Rolle, und zwar deshalb, weil bei einer Erhitzung von Leitungswasser eine Zerlegung des Wassers in einzelne Bestandteile stattfindet. Ein Teil der zerlegten Bestandteile, insbesondere die Carbonate, schlagen sich als sogenannter Kesselstein an den wasserführenden Teilen des Dampfbügeleisens nieder. Kesselstein ist aus verschiedenen Gründen unerwünscht. Er wirkt einmal als Wärmeisolator, was sich in einem erhöhten Energieverbrauch niederschlägt. Darüber hinaus können aber Rohre oder durchmesserkleine Leitungen sich mit der Zeit durch Kesselstein völlig zusetzen. In der Praxis läßt sich der Kesselstein durch Säuren beseitigen. Sofern es sich um Kupfer, Messung od.dgl. Metalle handelt, können zum Entfernen von Kesselstein verdünnte Lösungen von Milchsäure oder Essigsäure verwendet werden. Die Hersteller bzw. Verteiler von elektrisch betriebenen Dampfbügeleisen empfehlen daher in aller Regel innerhalb bestimmter Zeitintervalle ein Entkalken. Die Zeitabstände, in denen ein solches Entkalken durchgeführt werden muß, sind aber von dem Härtegrad des benutzten Leitungswassers abhängig.

Es sind auch sogenannte Entkalkungsanzeigevorrichtungen bekannt, die vielfach auf elektrischer oder elektronischer Basis arbeiten. Sie haben sich in der Praxis nicht durchsetzen können, nicht zuletzt deshalb, weil sie einmal einen erheblichen technischen Aufwand erfordern, und zum anderen, weil sie trotzdem nicht das gewünschte optimale Ergebnis bringen.

Darüber hinaus gibt es auch mehrere Ausführungsformen von Dampfbügeleisen der eingangs näher gekennzeichneten Art, bei denen ein Entkalkungsmittel zum Enthärten des Wassers benutzt wird. Ein solches Dampfbügeleisen ist in der JP-OS 60-169 997 (= D3) offenbart. Bei einer der in dieser Druckschrift offenbarten Ausführungsformen von Dampfbügeleisen befindet sich das Entkalkungsmittel in einem rohrförmigen Verbindungsstück zwischen dem Wasserbehälter und der Verdampferkammer des Dampfbügeleisens. An sich ist es vorteilhaft, ein Entkalkungsmittel in der Nähe des Wasserbehälter anzuordnen, weil dann in die Verdampferkammer nur entkalktes Wasser gelangt. Jedoch hat diese bekannte Ausbildung auch Nachteile. Einmal bereitet es Schwierigkeiten, das Entkalkungsmittel in das rohrförmige Verbindungsstück einzubringen, weil es in einem verhältnismäßig schwer zugänglichen Bereich des Innenraumes des Gehäuses liegt, zum anderen ist die im Verbindungsstück unterzubringende Menge an Entkalkungsmittel relativ klein. Der Benutzer dieses bekannten Dampfbügeleisens hat keine Möglichkeit, die Beschaffenheit des Entkalkungsmittels zu überprüfen. Darüber hinaus ist ein Auswechseln des verbrauchten Entkalkungsmittels schwierig.

Durch die GB-PS 1 022 697 (=D2) ist ein Dampfbügeleisen bekanntgeworden, bei dem ein Entkalkungsmittel im Bereich des Einlasses des Wasserbehälters angeordnet ist, wobei das Entkalkungsmittel zum Erkennen seiner Beschaffenheit von außen durch ein Sichtfenster sichtbar ist. Bei diesem Dampfbügeleisen befindet sich das Entkalkungsmittel in einem Behälter, der in einer Ausnehmung des Handgriffes des Dampfbügeleisens untergebracht ist. Diese Ausnehmung ist zur Außenseite des Handgriffes hin durch einen entfernbaren Wandungsteil verschlossen, der seinerseits das Sichtfenster aufweist. Nachteilig ist dabei, daß das Entkalkungsmittel im Bereich des Einlasses des Wasserbehälters angeordnet ist. Dadurch gestaltet sich das Befüllen des Wasserbehälters schwierig, weil das Durchfließen des Wassers durch das Entkalkungsmittel langwierig ist.

Die druckschriftlich vorveröffentlichte DE 30 33 961 A1 zeigt ein elektrisch beheiztes Dampfbügeleisen, in dessen Wasserbehälter ein Enthärter (ein Entkalkungsmittel) angeordnet ist, wobei der Enthärter durch eine siebartige, wasserdurchlässige Wandung vom Inneren des Wasserbehälters getrennt ist. Dabei ist auch vorgesehen, den Enthärter in einer Patrone mit siebartiger Wandung unterzubringen. Eine solche Patrone ist mit ihrer wasserdurchlässigen Wandung, die Wasserbehälterwandung durchdringend, im Wasserbehälterinneren angeordnet. Der wasserundurchlässige Patronenboden ist dabei mit dem Außenmantel des Wasserbehälters lösbar verbunden. Bei einer konkreten Ausführungsform ist die Patrone in die Behälterwandung des Wasserbehälters geschraubt, und es ist zwischen der Patrone und dem Wasserbehälter eine Dichtung vorgesehen. Es ist bei diesem bekannten Dampfbügeleisen ferner eine transluzente Tankwandung vorgesehen, um dem Benutzer die Möglichkeit zu geben, feststellen zu können, ob der Enthärter verbraucht ist. Dies kann dadurch festgestellt werden, daß ein Farbumschlag des Enthärters oder eines beigemischten Indikators erfolgt. Bei dieser bekannten Ausführungsform des Dampfbügeleisens erfolgt keine Anordnung der den Enthärter enthaltenden Patrone im Bereich des Auslasses des Wasserbehälters. Vielmehr ragt die Patrone frei in den Wasserbehälter, derart, daß sie vom Wasser völlig umspült werden kann. Der Wasserbehälter dieses bekannten Dampfbügeleisens ist nicht abnehmbar.

Bei einer Alternativlösung des Dampfbügeleisens nach DE 30 33 964 A1 ist vorgesehen, die Enthärtermasse lose in den Wasserbehälter zu geben. Behältereinlauf und Behälterauslauf sind dabei durch Siebe verschlossen. Diese sollen einmal verhindern, daß der Enthärter in die Verdampfungskammer gelangt, und zum anderen sollen sie dafür sorgen, daß bei Bedarf der Wasserbehälterinhalt ausgeleert werden kann, ohne daß der Enthärter verlorengeht. Zum Entfernen des verbrauchten Enthärters ist in der Behälterwand eine verschließbare Öffnung vorgesehen.

Durch die US-PS 4 565 019 ist ein mehrteiliges Gerät bekanntgeworden, welches beim Bügeln von Textilien benutzt werden soll. Zu diesem Gerät gehört ein kastenförmiges Gehäuse, dessen obere Seite zum Aufstellen eines Dampfbügeleisens verwendet werden soll. Auf der Oberseite des Gehäuses ist ein Wasserbehälter derart angeordnet, daß sein Verschwenken in zwei Endlagen möglich ist. In der wirksamen einen Endlage kann dem Wasserbehälter Wasser entnommen werden, was in der anderen Endlage nicht möglich ist. In der wirksamen Endlage des Wasserbehälters kann das Wasser durch eine Öffnung in seiner Wandung abfließen. Es gelangt über nachgeschaltete Führungs- und Regeleinrichtungen in eine Rohrleitung, deren anderes Ende an eine Patrone angeschlossen ist, die mit einem Entkalkungsmittel bzw. mit einem Wasserweichmacher gefüllt ist. In der Patrone wird das Wasser behandelt und kann dann von dort entkalkt weitergeleitet werden. Oberhalb der Patrone befindet sich in der Oberseite des Gehäuses ein Sichtfenster. Durch dieses besteht für den Benutzer des Gerätes die Möglichkeit der Überwachung des Entkalkungsmittels der Patrone. Das Dampfbügeleisen selbst hat bei dem Gerät nach US-PS 4 565 019 weder eine Entkalkungspatrone noch ein Sichtfenster. Diese Teile sind in dem kastenförmigen Gehäuse untergebracht, auf dem das Dampfbügeleisen abgestellt werden kann.

Durch die DE-A 30 14 493 (=D1) ist ein Haushaltsgerät mit Heißwasserbereiter bekanntgeworden. Bei der bevorzugten Ausführungsform eines solchen Haushaltsgerätes handelt es sich um eine Kaffeemaschine mit einem oberhalb eines Auffangbehälters angeordneten Aufbrühgefäß, in welches eine Heißwasserzulaufleitung mündet, die von einem Durchlauferhitzer versorgt ist, dessen Zulauf mit einem abnehmbaren Wasservorratsbehälter verbunden ist, in dem ein Massefilter liegt. Die Filtermasse ist dabei in einem Formkörper untergebracht, der auf der einen Seite mit Zulauföffnungen und auf einer hiervon entfernten Seite mit Ablauföffnungen versehen ist. Dabei ist der Bodenbereich des Wasservorratsbehälters als formschlüssige Aufnahme für einen solchen Formkörper ausgebildet. Bevorzugt ist dabei der Boden des Wasservorratsbehälters mit einer Vertiefung versehen, in die der Formkörper oder ein Teil desselben paßt. Bei diesem bekannten Haushaltsgerät, wie einer Kaffeemaschine, fehlt ein Sichtfenster, durch welches der Benutzer des Haushaltsgerätes erkennen kann, ob ein Erneuern des Entkalkungsmittels durchgeführt werden muß.

Die Erfindung will elektrisch betriebene Dampfbügeleisen gemäß der JP-OS 60-160 997 (=D3) weiter verbessern, also solche Dampfbügeleisen, bei denen einerseits ein vom Gehäuse des Dampfbügeleisens entfernbarer Wasserbehälter vorhanden ist, und bei dem zum anderen dem Wasserbehälter ein Entkalkungsmittel zugeordnet ist.

Aufgabe der vorliegenden Erfindung ist es, ein derartiges Dampfbügeleisen so zu gestalten, daß einmal ein Zusammenwirken des entfernbaren Wasserbehälters mit dem Aufnahmeraum für das Entkalkungsmittel stattfindet, und daß zum anderen dem Benutzer die Möglichkeit gegeben wird, die Beschaffenheit des Entkalkungsmittels von außen her zu überprüfen.

Erfindungsgemäß kennzeichnet sich ein Dampfbügeleisen der eingangs näher gekennzeichneten Art durch folgende weiteren Merkmale:
a) das Entkalkungsmittel ist im Bereich der Ausflußöffnung des Wasserbehälters vorgesehen;
b) im Bereich des Aufnahmeraumes für das Entkalkungsmittel befindet sich ein Sichtfenster;
c) Begrenzungswandungen des Gehäuses des Dampfbügeleisens bilden den Aufnahmeraum für das Entkalkungsmittel und wirken mit einem Kupplungsstück des Wasserbehälters zusammen.

Die erfindungsgemäße Ausbildung eines elektrisch betriebenen Dampfbügeleisens hat gegenüber dem Bekannten erhebliche Vorteile. Dies gilt einmal für die Beschickung des Aufnahmeraumes für das Entkalkungsmittel. Der Aufnahmeraum ist nach dem Entfernen des Wasserbehälters frei zugänglich. Es ist ein leichtes Zusammenkuppeln des Wasserbehälters mit den Begrenzungswandungen des Aufnahmeraumes für das Entkalkungsmittel möglich. Bei der bevorzugten Ausführungsform der Erfindung wird das Entkalkungsmittel in einem eine zerstörbare Umhüllung aufweisenden Wegwerfbehälter untergebracht, und dieser ist in den Aufnahmeraum des Gehäuses einlegbar. Dies geschieht im unzerstörten Zustand seiner Umhüllung. Erst beim Zusammenkuppeln des Wasserbehälters mit dem Gehäuse des Dampfbügeleisens erfolgt die Zerstörung der Umhüllung, die beispielsweise als Kunststoffolie ausgebildet sein kann. Das Zerstören der Umhüllung geschieht in einfacher Weise dadurch, daß das Kupplungsstück und/oder der Boden des Aufnahmeraumes Durchstechspitzen aufweisen. Diese sind zweckmäßig in größerer Anzahl vorhanden, so daß beim Anbringen des Wasserbehälters eine Vielzahl von Löchern in der Umhüllung erzeugt wird, und zwar sowohl im Bereich der Oberfläche als auch im Bereich des Bodens. Auf diese Weise wird für einen guten Ausfluß des Wassers aus dem Wasserbehälter in die nachgeschalteten Leitungen beim bestimmungsgemäßen Gebrauch des Dampfbügeleisens gesorgt.

Nach einem anderen Vorschlag der Erfindung wird demgegenüber ein loses Entkalkungsmittel in einen nach oben offenen Aufnahmebehälter eingeführt, und dieser dann in den Aufnahmeraum des Gehäuses eingesetzt.

Dabei empfiehlt es sich, den Außenbehälter einen nach außen vorspringenden Rand aufweisen zu lassen, der nach seinem Einsetzen in den Aufnahmeraum in einen versenkten Bereich desselben eingreift. Dadurch wird nicht nur ein ebener Abschluß erreicht, sondern zugleich auch eine Lagesicherung des Aufnahmebehälters.

Bei dem erfindungsgemäßen Dampfbügeleisen kann die Beschaffenheit des Entkalkungsmittels von außen her vom Benutzer beobachtet werden, denn im Bereich des Aufnahmeraumes für das Entkalkungsmittel befindet sich das Sichtfenster. Der Benutzer kann somit jederzeit einen Farbumschlag des Entkalkungsmittels feststellen und dann einen Austausch vornehmen.

Es ist nach einem weiteren Vorschlag vorgesehen, das Entkalkungsmittel in einer in den Aufnahmeraum einbringbaren Refillpatrone anzuordnen.

Auf der Zeichnung ist die Erfindung in mehreren Ausführungsbeispielen dargestellt, und zwar zeigen:
- Fig. 1: in schaubildlicher Darstellung eine Ausführungsform des erfindungsgemäß ausgebildeten, elektrisch betriebenen Dampfbügeleisens mit einem entfernbaren Wasserbehälter,
- Fig. 2: die Rückansicht des Dampfbügeleisens gemäß der Fig. 1 der Zeichnung,
- Fig. 3: in vergrößertem Maßstab, teilweise im Schnitt, teilweise weggebrochen und in explosionsartiger Darstellung die Einzelteile des rückwärtigen Bereiches des Dampfbügeleisens nach der Fig. 1,
- Fig. 4: in ähnlicher, explosionsartiger Darstellung wie die Fig. 3 ein elektrisch betriebenes Dampfbügeleisen in einer abgewandelten Ausführungsform.

Es sei zunächst erwähnt, daß in den Figuren der Zeichnungen nur diejenigen Teile eines elektrisch betriebenen Dampfbügeleisens wiedergegeben sind, die für das Verständnis der Erfindung Bedeutung haben. So fehlen insbesondere die Regel- und Steuereinrichtungen des Dampfbügeleisens und auch die elektrischen Anschlüsse sowie die Heizung für die Sohlenplatte. Ferner sind in den Figuren der Zeichnungen Fördereinrichtungen, wie Wasserpumpen, Tropfventile od.dgl., nicht dargestellt. Alle fehlenden und nicht dargestellten Teile können im übrigen eine bekannte Ausbildung haben.

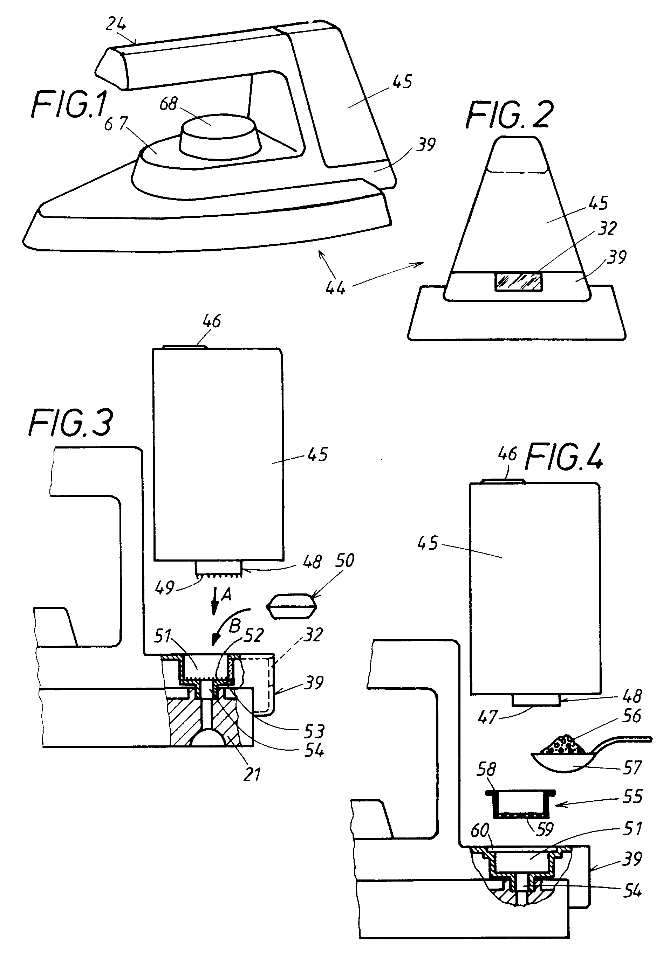

Das in der Fig. 1 der Zeichnung dargestellte Dampfbügeleisen ist generell mit 44 bezeichnet. Dieses Dampfbügeleisen hat ein Gehäuse 39, das in bekannter Weise aus mehreren Teilen zusammengesetzt sein kann. Das Gehäuse 39 ist nach unten hin durch eine Sohlenplatte 21 verschlossen. Die Sohlenplatte 21 kann in bekannter Weise mit einer Vielzahl von Auslaßöffnungen versehen sein, von denen in der Fig. 3 der Zeichnung nur eine einzige wiedergegeben ist. Die Anzahl und die Anordnung dieser Auslaßöffnungen ist variabel. Auf der der Sohlenplatte 21 gegenüberliegenden Seite hat das Gehäuse 39 einen Handgriff 24. Im dargestellten Ausführungsbeispiel ist der Handgriff 24 nach vorne hin offen.

Wie aus der Fig. 3 der Zeichnung hervorgeht, ist im Bereich des Gehäuses 39 des Dampfbügeleisens 44 ein Sichtfenster 32 angeordnet. Durch dieses Sichtfenster 32 hindurch kann der Benutzer des Dampfbügeleisens die Beschaffenheit des benutzten Entkalkungsmittels erkennen. Wie die Fig. 3 der Zeichnung am besten erkennen läßt, hat das Dampfbügeleisen 44 einen entfernbaren Wasserbehälter 45, der zum Füllen von dem Gehäuse 39 des Dampfbügeleisens 44 entfernt und danach wieder in seine Betriebslage überführt werden kann, was unter Benutzung von Kupplungsmitteln erfolgt. Dabei ist der Wasserbehälter 45 im rückwärtigen Bereich des Gehäuses 39 des Dampfbügeleisens 44 untergebracht. Das Gehäuse 39 hat hier einen nicht näher bezeichneten Vorsprung, in welchen ein nach oben hin offener Aufnahmeraum 51 für ein Entkalkungsmittel vorgesehen ist. Die seitlichen Begrenzungswandungen dieses Aufnahmeraumes 51 dienen zugleich als Kupplungselemente des Gehäuses, in dem sie klemmend mit einem an der Unterseite des Wasserbehälters 45 angeordneten Kupplungsvorsprung 48 zusammenwirken. Dieser Kupplungsvorsprung 48 ist in seinen Abmessungen demjenigen des Aufnahmeraumes 51 angepaßt, wobei jedoch darauf geachtet wird, daß ein klemmender Einsatz und damit ein Festlegen des Wasserbehälters 45 am Gehäuse erfolgt. Das Anbringen des Wasserbehälters 45 erfolgt in Richtung des Pfeiles A der Fig. 3. Dabei gelangt der in der Mitte der Unterseite des Wasserbehälters 45 liegende Kupplungsvorsprung 48 in den Aufnahmeraum 51 des Gehäuses 39 des Dampfbügeleisens 44.

In diesen Aufnahmeraum 51 ist vorher ein Entkalkungsmittel eingebracht. Bei dem Ausführungsbeispiel nach der Fig. 3 der Zeichnung ist das Entkalkungsmittel innerhalb eines Wegwerfbehälters 50 untergebracht. Dieser Wegwerfbehälter 50 besitzt eine solche Gestalt und solche Abmessungen, daß er bequem in dem Aufnahmeraum 51 untergebracht werden kann. Das in der Fig. 3 nicht sichtbare Entkalkungsmittel wird von einer leicht zerstörbaren Hülle, beispielsweise von einer dünnen Folie, umgeben. Die Umfangsfläche des Wegwerfbehälters 50 ist für Transport- und Lagerzwecke allseitig geschlossen, so daß auch an das in seinem Inneren befindliche Entkalkungsmittel keine Feuchtigkeit herantreten kann. Wenn man dagegen den Wegwerfbehälter 50 in den Aufnahmeraum 51 einbringt, dann kommen an dessen Boden 53 angeordnete Durchstechspitzen 52 mit der zugekehrten Unterseite des Wegwerfbehälters 50 in Kontakt und durchstoßen die Umhüllungsfolie. Da dies an zahlreichen Stellen erfolgt, weil eine große Anzahl von Durchstechspitzen 52 vorgesehen ist, wird für einen guten Durchfluß des enthärteten Wassers gesorgt.

Auf der gegenüberliegenden anderen Seite wird der Wegwerfbehälter 50 ebenfalls zerstochen, und zwar durch die an der Unterseite der Stirnfläche des Kupplungsvorsprunges 48 angeordneten weiteren Durchstechspitzen. Damit wird sowohl an der dem Wasserbehälter 45 zugekehrten als auch an der davon abgekehrten Seite der Wegwerfbehälter 50 durchlöchert, so daß beim bestimmungsgemäßen Gebrauch des Dampfbügeleisens 44 das enthärtete Wasser durch den den Boden 52 des Aufnahmeraumes 51 nachgeschalteten Auslaß 54 abströmen und zu den anderen Betriebsteilen des Dampfbügeleisens 44 geleitet werden kann. Auf der dem Kupplungsstück 48 gegenüberliegenden Oberseite hat der Wasserbehälter 45 einen Deckel 46, der eine Einfüllöffnung verschließt. Durch diese Einfüllöffnung wird der Wasserbehälter gefüllt. Er kann beispielsweise unter eine Wasserleitung gehalten werden.

Wie aus der Fig. 2 der Zeichnung ersichtlich, ist im Gehäuse 39 ein Sichtfenster 32 vorhanden, welches in Höhe der seitlichen Begrenzungswand des Aufnahmeraumes 51 liegt, so daß der Benutzer erkennen kann, ob ein Farbumschlag des Entkalkungsmittels erfolgt ist. Zu diesem Zweck ist die dem Sichtfenster 32 zugekehrte Wandung des Aufnahmeraumes 51 durchsichtig gehalten.

Nachzutragen bleibt noch, daß bei der Ausführungsform des Dampfbügeleisens 44 nach der Fig. 1 der Zeichnung das Gehäuse 39 einen erhöhten Bereich 67 aufweist, auf dessen Oberseite ein Stellrad 68 angebracht wird, mit dem beispielsweise die Temperatur des Dampfbügeleisens 44 geregelt werden kann.

Auch bei der Ausführungsform des Dampfbügeleisens gemäß der Fig. 4 der Zeichnung wird ein entfernbarer Wasserbehälter 45 benutzt, der auch an seiner Oberseite einen Deckel 46 zum Verschließen einer Einfüllöffnung für das Wasser aufweist und an der gegenüberliegenden Unterseite einen Kupplungsvorsprung 48 mit einem Auslaß 47 hat, nur fehlen in diesem Falle die Durchstechspitzen an der Stirnseite des Kupplungsstückes 48, das gleiche gilt für den Boden des Aufnahmeraumes 51. Diese Durchstechspitzen werden bei der Ausführungsform der Erfindung nach der Fig. 4 der Zeichnung nicht benötigt, denn in diesem Falle wird kein Wegwerfbehälter 50 benutzt, um ein Entkalkungsmittel in seine wirksame Lage zu überführen. Vielmehr wird nunmehr, z.B. mit Hilfe eines Löffels 57 od.dgl., ein loses Entkalkungsmittel 56 verwendet. Dieses wird aber nicht direkt in den Aufnahmeraum 51 des Gehäuses 39 eingebracht, sondern in einen besonderen Aufnahmebehälter 55, dessen Boden als Siebboden 59 ausgebildet ist. Der Aufnahmebehälter 55 hat einen nach außen hin gerichteten umlaufenden Rand 58, der in seiner wirksamen Lage in einen versenkten Randbereich des Aufnahmeraumes 51 zu liegen kommt. Dadurch wird ein ebener Abschluß erreicht. Der Aufnahmebehälter 45 wird deshalb benutzt, weil er das Entfernen des Entkalkungsmittels nach dem Gebrauch erleichtert. Denn es könnte Schwierigkeiten geben, das Entkalkungsmittel aus dem Aufnahmeraum 51 zu entfernen, wenn dieses direkt auf dem Boden desselben aufgebracht würde. Diese Schwierigkeiten entfallen aber, wenn man den dargestellten Aufnahmebehälter 55 benutzt. Dieser kann nämlich als Ganzes aus dem Aufnahmeraum 51 entfernt werden. Danach lassen sich daraus die verbrauchten Entkalkungsmittel entfernen. Der Aufnahmeraum 55 kann ausgespült werden, um dann erneut mit einem losen Granulat, also einem Entkalkungsmittel 56, z.B. mittels des Löffels 57, gefüllt zu werden.

Bei der Ausführungsform des Dampfbügeleisens nach der Fig. 4 der Zeichnung ist der Boden des Aufnahmeberhälters 51 glatt gehalten. Er hat lediglich einen etwa in seiner Mitte liegenden Auslaß 54, durch den über die Verbindungsleitungen 38 das enthärtete Wasser zu den nachgeschalteten Einrichtungen geführt werden kann.

Der Wasserbehälter 45 gemäß den Fig. 1 bis 4 der Zeichnungen ist aus einem formstabilen Werkstoff hergestellt, weil er mehrfach benutzt werden soll.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Insbesondere kann die Erfindung auch bei anderen an sich bekannten Ausführungsformen von Dampfbügeleisen eingesetzt werden. Ferner können die Entkalkungsmittel eine andere als die jeweils dargestellte Ausbildung erhalten. Insbesondere ist eine Anpassung an den jeweils vorhandenen Aufnahmeraum 51 möglich, soweit es sich um kompaktförmige Entkalkungsmittel handelt. Soweit Refillpatronen benutzt werden, können diese ebenfalls dergestalt und den Abmessungen des Aufnahmeraumes 51 angepaßt werden, in denen sie untergebracht werden sollen. Als Entkalkungsmittel lassen sich alle im Handel befindlichen Chemikalien benutzen, die dem Enthärten von Wasser dienen. Bei der Dimensionierung des Entkalkungsmittels ist darauf zu achten, daß ein zügiger Durchlaß des Wassers erzielt wird.

### Bezugszeichenliste:

- 32: Sichtfenster
- 39: Gehäuse
- 44: Dampfbügeleisen
- 45: Wasserbehälter
- 46: Deckel für Einfüllöffnung (von 45)
- 47: Auslaß (von 45)
- 48: Kupplungsstück (von 45)
- 49: Durchstechspitze
- 50: Wegwerfbehälter (für Entkalkungsmittel)
- 51: Aufnahmeraum (in 39)
- 52: Durchstechspitzen (an 53)
- 53: Boden (von 51)
- 54: Durchlaß (von 55)
- 55: Aufnahmebehälter
- 56: (loses) Entkalkungsmittel
- 57: Löffel (für 56)
- 58: Rand (von 53)
- 59: Siebboden (von 55)
- 60: versenkter Randbereich (von 51)
- 67: erhöhter Bereich (von 39)
- A: Pfeil (Einsetzrichtung für 45)
- B: Pfeil (Einsetzrichtung für 50)
- 68: Stellrad (II. Ausführung)
- 69: großer Verschlußdeckel (von 61)
- A: Pfeil (Einsetzrichtung für 45)
- B: Pfeil (Einsetzrichtung für 50 bzw. 65)

## Patentansprüche

1. Elektrisch betriebenes Dampfbügeleisen mit einem einen Handgriff (24) aufweisenden Gehäuse (39), mit einem vom Gehäuse (39) entfernbaren Wasserbehälter (45) und mit einer Verdampferkammer sowie mit einem Entkalkungsmittel (56),
gekennzeichnet durch folgende Merkmale:
a) das Entkalkungsmittel (56) ist im Bereich der Ausflußöffnung (47) des Wasserbehälters (45) vorgesehen;
b) im Bereich des Aufnahmeraumes (51) für das Entkalkungsmittel (56) befindet sich ein Sichtfenster (32);
c) Begrenzungswandungen des Gehäuses (39) des Dampfbügeleisens bilden den Aufnahmeraum (51) für das Entkalkungsmittel (56) und wirken mit einem Kupplungsstück (48) des Wasserbehälters (45) zusammen.

2. Dampfbügeleisen nach Anspruch 1, dadurch gekennzeichnet, daß das Entkalkungsmittel (56) in einem eine zerstörbare Umhüllung aufweisenden Wegwerfbehälter (50) untergebracht und dieser in den Aufnahmeraum (51) des Gehäuses (39) einlegbar ist, wobei das Kupplungsstück (48) und/oder der Boden (53) des Aufnahmeraumes (51) der Zerstörung der Umhüllung dienende Durchsteckspitzen (49) bzw. (52) aufweisen.

3. Dampfbügeleisen nach Anspruch 1, dadurch gekennzeichnet, daß das Entkalkungsmittel (56) in einen Aufnahmebehälter (55) einfüllbar und dieser in den Aufnahmeraum (51) des Gehäuses (39) einsetzbar ist.

4. Dampfbügeleisen nach Anspruch 3, dadurch gekennzeichnet, daß der Aufnahmebehälter (55) einen nach außen vorspringenden Rand (58) aufweist, der nach seinem Einsetzen in den Aufnahmeraum (51) in einem versenkten Bereich (60) desselben eingreift.

5. Dampfbügeleisen nach einem der vorangehenden Ansprüche, dadurch gekennzeichnet, daß das Entkalkungsmittel (56) in einer in den Aufnahmeraum (51) einbringbaren Refillpatrone angeordnet ist.

## Claims

1. An electrically operated stem iron with a housing (39) having a handle (24), a water container (45) which is removable from the housing (39), and a vaporiser chamber, and with a decalcification agent (56), characterised by the following features:
a) the decalcification agent (56) is provided in the region of the discharge flow opening (47) of the water container (45);
b) a sight window (32) is disposed in the region of the receiving space (51) for the decalcification agent (56); and
c) defining walls of the housing (39) of the stem iron form the receiving space (51) for the decalcification agent (56) and co-operate with a coupling portion (48) of the water container (45).

2. A stem iron according to claim 1 characterised in that the decalcification agent (56) is arranged in a disposable container (50) having a destructible casing and the disposable container can be fitted into the receiving space (51) of the housing (39), wherein the coupling portion (48) and/or the bottom (53) of the receiving space (51) have piercing points (49) or (52) respectively which serve to destroy the casing.

3. A stem iron according to claim 1 characterised in that the decalcification agent (56) can be introduced into a receiving container (55) and the receiving container can be fitted into the receiving space (51) of the housing (39).

4. A steam iron according to claim 3 characterised in that the receiving container (55) has an outwardly projecting rim (58) which, after it has been fitted into the receiving space (51), engages into a recessed region (60) thereof.

5. A stem iron according to one of the preceding claims characterised in that the decalcification agent (56) is arranged in a refill cartridge which can be introduced into the receiving space (51).

## Revendications

1. Fer à repasser électrique et à vapeur muni d'un boîtier (39) présentant une poignée (24), d'un réservoir d'eau (45) amovible par rapport au boîtier (39) et d'une chambre de vaporisation, ainsi que d'un moyen de détartrage (56), caractérisé en ce que :
a) le moyen de détartrage (56) est prévu dans la zone de l'ouverture d'écoulement (47) du réservoir d'eau (45);
b) une fenêtre d'observation (32) est réalisée dans la zone de l'enceinte de réception (51) du moyen de détartrage (56);
c) des parois de délimitation du boîtier (39) du fer à repasser à vapeur constituent l'enceinte de réception (51) pour le moyen de détartrage (56) et coopèrent avec une pièce d'accouplement (48) du réservoir d'eau (45).

2. Fer à repasser à vapeur selon la revendication 1, caractérisé en ce que le moyen de détartrage (56) est logé dans un récipient jetable (50) présentant une enveloppe susceptible d'être détruite ou perforée, ce récipient jetable étant susceptible d'être introduit dans l'enceinte de réception (51) du boîtier (39), et en ce que la pièce d'accouplement (48) et/ou le fond (53) de l'enceinte de réception (51) comporte(nt) des pointes de transpercement (49 ou 52), servant à la destruction ou à la perforation de l'enveloppe.

3. Fer à repasser à vapeur selon la revendication 1, caractérisé en ce que le produit de détartrage (56) est susceptible d'être introduit dans un récipient de réception (55) et celui-ci est susceptible d'être introduit dans l'enceinte de réception (51) du carter (39).

4. Fer à repasser à vapeur selon la revendication 3, caractérisé en ce que le récipient de réception (55) présente une bordure (58), faisant saillie vers l'extérieur et s'engageant, après insertion dans l'enceinte de réception (51), dans une zone en lamage ou en creux (60) de celle-ci.

5. Fer à repasser à vapeur selon l'une des revendications précédentes, caractérisé en ce que le moyen de détartrage (56) est disposé dans une cartouche rechargeable susceptible d'être logée dans l'enceinte de réception (51).
